# EUROPEAN PATENT SPECIFICATION

(11) **EP 3 765 801 B1**
(45) Date of publication and mention of the grant of the patent: **19.01.2022**
(21) Application number: 19712855.6
(22) Date of filing: 11.03.2019
(51) Int. Cl.: F25C 3/00

(54) **METHOD AND APPARATUS FOR MAKING WET SNOW**
VERFAHREN UND VORRICHTUNG ZUR HERSTELLUNG VON NASSSCHNEE
PROCÉDÉ ET APPAREIL DE PRODUCTION DE NEIGE HUMIDE

(30) Priority: 13.03.2018 IS 9091
(43) Date of publication of application: 20.01.2021
(73) Proprietor: Viglundsson, Thorsteinn I., 101 Reykjavik (IS)
(72) Inventor: Viglundsson, Thorsteinn I., 101 Reykjavik (IS)
(74) Representative: Schlich, George
(86) International application number: PCT/IS2019/000001
(87) International publication number: WO 2019/175905

(56) References cited:
- WO-A1-2016/006004
- US-A- 4 666 484
- US-A- 5 005 364

## Description

### BACKGROUND OF THE INVENTION

### 1. Field of the Invention.

The present invention relates to the method of making wet snow.

The present invention particularly relates, but is not limited to, a method of manufacturing wet snow from ice-slurry. Throughout the specification, the term "ice slurry" shall also mean "pumpable ice", as both terms are commonly used in the art, having characteristics that contain soluble compounds that act as freezing point depressants, where the ice slurry contains between 5% ice to 30% Ice, because ice slurry containing more than 30% ice is no longer pumpable ice as is generally understood in the art and as it is used in the invention. The invention also relates to the apparatus of making wet snow and to a system for producing the ice-slurry and converting ice-slurry to wet snow for use in chilling of foodstuff or in the use of separation of ice and aqueous liquid.

Throughout the specification, the term "wet snow" shall include artificial wet snow, or man-made wet snow, having characteristics similar to natural wet snow where the wet snow contains between 30% ice to 90% ice as it is made by and for the use of the invention.

### 2. Prior Art.

There have been many proposals for the manufacture of artificial snow for use on ski-slopes or in entertainment precincts. The document US 5 005 364 A discloses a method for manufacturing wet snow. The document US 4 666 484 A teaches the dewatering of ice slurry to produce wet snow. Making of snow for skiing areas is well known in the art and is mainly made directly from water such as is thought by Dupre, H.K. (1989) in US Patent No. 5,004,151. Snow can also be made directly from ice as is thought by in US Patent 8,403,242 (Bucceri, A., 2011) and Patent application US20110147498. Snow made with these methods has however, not been used, or is not suitable for use in the food sector to chill foodstuffs such as meat. Examples of the manufacture of artificial wet snow suitable for use as cooling aid for foodstuffs has been put forward in the inventor's own earlier proposal as can be found in Viglundsson, (2014), PCT Patent Application No. WO/2016/006004.

While the proposal has enjoyed some commercial success, practical problems which have arisen include:
a) the complex design and difficult operation of apparatus of many moving parts;
b) the capital cost of the previous equipment; and
c) the nature of ice-slurry which tends to separate and form ice clumps that clog the outlets of the apparatus; and
c) complex controls and ongoing running costs, particularly due to the energy inputs required.

Super-chilling of fresh food is receiving increasing attention as a method to store food products at temperatures from 0°C to just below their initial freezing point, which can be in the range of -1°C to -7°C. At such temperatures, 10 to 50% of the water in the food is ice, but the food is not hard-frozen and typically considered fresh by authorities and consumers. The freezing point of poultry meat is generally recognized to be between -1.5 and -2°C.

The quality and shelf-life of fresh food depends on many factors such as hygiene and handling during pre- and post-processing (from catch/sacrifice to in-house processing), but internal factors like bacterial growth, enzyme activity, chemical reactions and dehydration are the main causes of quality loss in fresh foods such as fish and chicken. Keeping the food products at low temperature during processing, storage and transport is therefore the main issue here. Experiments for poultry have shown that the shelf-life of chicken that was 7 days at 4°C was extended to 10-11 days at 2°C, to 10-12 days at 0°C, and to 17-18 days at -2°C (Sawaya et al., 1997).

It is not desirable to go beyond the initial freezing temperature of the tissue in foodstuffs since that may lead to denaturation of the muscle proteins as well as structural damage of membranes, which can result in increased drip loss, loss of water holding capacity and textural changes. Experiments have shown that the temperature of maximum cooling activity without freezing is about -2°C for both poultry and fish (Johnston et al., 1994; Sawaya et al., 1997). If the product is cooled very close to its freezing point (Tf) during precooling, rapid cooling is necessary to ensure formation of small ice crystals within the product structure and minimize textural damages of the muscle (Valtýsdóttir et al. 2010).

Various methods are well known in the art to cool fresh foods rapidly after harvesting, catch or slaughter, including contacts with cold surface, blowing with super cold air, spraying with cold water, covering with plate ice or cold gelpacks or soaking into tanks with ice-slurry, as well as pumping onto or laying over with ice slurry. Sometimes these methods are used in combination for example as combination of air blast and contact cooling thought by Arnarsson and Norddahl (2004) in US Patent 6,825,446 or air blast and surface freezing combined with spraying cold water as thought by US Patent 6,481,220 (Butler, 2002).

In addition to flesh deterioration and bacterial spoilage that can happen when the cooling process is slow, a further problem with slow cooling, especially of carcasses from warm-blooded animals, is that they lose moisture which can result in significant weight-loss of the order of 1-3%. Such weight loss is even increased in super cold air, which by nature is very dry. Treating animal carcass with freezing cold air can also result in crust-freezing and unwanted discoloration of the skin Okamoto et al (2002).

Therefore a process that can combine both very rapid cooling and minimize weight loss is highly desirable. Since ice-slurry is typically made from salt-containing water and contains very fine ice crystals with temperatures below 0°C, it is known in the art to be an extremely efficient cooling agent. However, the simple way of using it for rapid cooling by immersing perishable foods, such as meat, fish or vegetables into ice-slurry tanks, is no longer recommended. This is because bacteria are washed off the carcass and tend to accumulate in such immersion tanks and that will therefore facilitate cross-contamination and the spreading of pathogenic bacteria from one animal throughout the production chain. Ice-slurry at -2 to - 4°C contains about 3-6% NaCl and if used unprocessed to spray onto foodstuffs or to immerse in, as thought by UK Patent application GB 2398370 (Hubbard, 2003) and Japanese patent JP2009034023 and it can affect the salt content of the food, which is undesirable, or may not even be allowed (Graiver et al., 2006; Carciofi and Laurindo, 2007). In JP201306295 (WO2014/181402A1) the use of ice slurry to cool poultry by pumping ice slurry directly into the cavity of the birds on a conveyer belt is also described.

I described before (Viglundsson, 2014) new ways to use the highly desirable cooling, and non-drying properties of wet snow made by filtering off most of the salt-containing liquid from ice slurry and converting it to wet snow of very low salt content just before using it directly and separately on individual carcasses or food parts. This action is highly desirable, since it removes most of the salt and the wet snow adheres much better to surfaces, such as animal skin, than the unprocessed liquid and salty ice-slurry.

The production and use of ice-slurry, (also called slurry-ice, pumpable ice, binary ice or liquid ice), is well known in the art. (Slurry-ice Based Cooling Systems Application Guide, http://www.epsltd.co.uk/slurry_ice.htm). The making of wet snow or partly filtered ice-slurry, also called dried ice-slurry, for cooling of foodstuffs has been previously thought by me (Viglundsson 2014) and by US patent 4.936.102 (Goldstein and La, 1988).

In the use of ice-slurry, it is typically pumped to the location where it is applied and used or being stored in a tank as an intermediate storage before being pumped to the location where it is applied. Ice-slurry is most commonly produced from water that contains different concentrations of solutes, such as salts, most commonly NaCl in different concentrations. The concentration of ice and salt as well as the freezing energy used is controlled during production and can change during pumping, mixing in the tank, or when being applied. The ice-slurry solution can have a different composition at the place of application, compared to when it was made. The various internal factors, melting of the ice crystals due to thermodynamic changes, loss of energy due to contact with the outer walls of the pipes and tank, energy transferred to the ice from the pumps and other factors can have a big influence on the characteristics of the ice-slurry solution. Therefore, unless specifically monitored and controlled during the whole process or at the point of use, there is no certainty of the temperature, salt concentration, physical properties, or cooling capacity of the ice mixture as the ice crystals can melt or grow, become aggregated or form clumps. These factors make the use of ice-slurry tricky and difficult in many applications.

Upon freezing of water, the ice-crystals tend to be formed from only water molecules, excluding any solutes in the water and thereby in effect separating the solute molecules that will become more concentrated in the remaining un-frozen water. By physical separation of the ice-crystals from the remaining liquid part, purified water can be obtained from melting the ice, whereas the solutes have also become isolated or concentrated in another fraction. Obtaining large and pure, or purified ice-crystals that can easily be separated from the remaining liquid is therefore the key issue for many applications of ice-slurry (Bellas and Tassou, 2005). Different separation techniques have been used for separating ice from ice-slurry, including centrifugation and filtration such as thought by US Patent 5,816,057 (Dickey et al, 1998). However, although filtration is a simple and highly desirable technique to use for this purpose, it can be problematic since many filters tend to get clogged upon extended use and therefore lose their function, unless a special mechanism of cleaning or regeneration is included in the process.

I described an apparatus and method to make wet snow and to shoot it at target to provide a chilling action on the target (see Viglundsson, 2014). Further advantage of the method was that the wet snow so produced and shot onto the food contained very low salt, typically less than 1% salt. The present apparatus has essentially the same intended function as the previously described invention but its design and function is very different. My older invention described an apparatus and method where the ice-slurry was processed by a filtering action, in multiple chambers or in a single chamber where the dewatering or filtering of the ice-slurry was performed by moving parts that opened or closed the processing chamber to perform the different actions of filling the chamber with wet ice-slurry, then removing the brine by filtering action, where the filter was flat against the direction of the flow and finally delivering the wet snow by a shooting action onto the target foodstuff. Several problems were involved with the use of my previous invention, particularly due to leakage and/or friction with the many moving part and especially due to clumping of the dewatered snow in the filter unit, resulting in clogging of the apparatus and preventing the shooting of the wet snow onto target.

In the present invention I have found a new way to make wet snow by applying the principle of filtration for continuous making of wet snow by using an apparatus that performs all of the steps previously described, the process of loading, filtering and discharging the wet snow by shooting with air pressure. In the new invention, all actions are now performed in a single unit with no moving parts and with no need to open and close the chamber for the process. But more importantly, a novel and unexpected solution to the clogging problem was to design the filter-support part in the form of a truncated cone or conical frustum, shaped as a right circular cone with an apex angle between 160 to 179 degrees. The ice-slurry enters the conical filter-house through the narrow opening end (aperture or apex) of the cone and the wet snow exits through the wide opening end of the cone (base).

In US patent 4.936.102 (Goldstein, & La, 1988) is described the use of ice-slurry for cooling foodstuffs, where the ice-slurry is slightly dried by filtering. There the ice-slurry is pumped continuously through flexible tubing, into and through a hollow cylindrical sieve (filter) that directs the ice-slurry through the filter housing that extends between the inlet for the wet ice-slurry and outlet for the dried ice-slurry. The liquid brine that gets through the cylindrical filter is therefore collected into the outer housing, which has a conical shape, only for the purpose of collecting and directing the brine to the lower end of the housing so it can be recirculated by pumping back to the tank that feeds the ice-slurry generator. The sieve (filter) used by Goldstein and La (1988), therefore is cylindrical with a diameter substantially the same as the flexible hose and does not have a conical shape as in the present invention. The conical shape and its direction towards the flow is a critical part of my new invention that prevents ice clogging and that allows for the problem free operation of the current new wet snow making apparatus and method.

In US patent. 2004/003174 (Dupre, H.K. 2004) is described the use of conical filter to remove dirt and debris from the water leading to a snow making apparatus and not for filtering the ice. Furthermore the direction of the conical filter is with the apex of the cone protruding upwardly in the direction of the flow of the water, which is opposite to the direction of the operation of my current new wet snow making apparatus and method.

### SUMMARY OF THE INVENTION

In my previous invention (Viglundsson 2014) an unexpected problem was encountered since when and ice-slurry, say at -5°C, is filtered, the brine gets removed and the remaining ice or wet snow is still at -5°C, but upon removal of the brine its inherent freezing point is instantly raised to say at -3°C, and therefore the wet snow will immediately freeze and form an ice clump. This makes the use of a flat or a cylindrical filter for the use of making wet snow, problematic and difficult.

In the present invention I have found a novel and unexpected solution to this problem by designing a conical filter, where the apex or narrow end of the conical filter is facing against the direction of the flow. Furthermore by driving the filtering and the discharge (shooting) of the wet snow with pressured air, instead of by mechanical push by piston or coil action the whole operation is more flexible.

In the present invention we describe the characteristics of an apparatus for processing ice-slurry in such a way that the ice-slurry is first produced in a generator, then transferred, typically by pumping into a filtering house unit, where the ice-slurry is filtered by removing the liquid part and leaving behind the ice fraction as wet snow. Finally the wet snow is discharged or shot by air pressure onto a targeted object. The wet snow adheres for some time and melts slowly, thereby cooling the object. The targeted object can be any kind of perishable goods, such as animal carcass or any parts thereof, also other types of food products, such as fish, vegetables, fruits or also non-biological products.

The present invention also relates to the use of an apparatus that produces wet snow from aqueous solutions containing different concentrations of dissolved materials made of salts and/or other solutes, thereby first making ice-slurry composed of a mixture of ice and liquid of different proportions. The wet snow so produced where the ice-component contains lower concentration of the dissolved material than the original solution and where the liquid-component contains higher concentration of the dissolved material than the original solution.

The ice-slurry can have different temperature, from 0 to -20°C depending on composition and therefore when filtered the wet snow made from said ice-slurry can have temperatures from 0 to -15°C. The apparatus of the invention can therefore be operated in such a way that the temperature of the produced wet snow can be controlled.

In certain embodiments the invention can also be used for desalination or for treating different kinds of wastewater, such as animal urine, to make purified water and concentrated solution of salts and other solutes found in the original liquid from where the ice-slurry was made.

The apparatus of the invention can be made by using any number of different materials available to those skilled in the art, or combination of different types of materials. Such materials include, but are not limited to, various metals or metal alloys, or glass, or organic materials such as wood or synthetic materials such as plastics.

In certain embodiments of the invention the apparatus can be controlled via a preprogrammed computer and software or as a coordinated task involving valves and switches coordinated beforehand and running in a prefixed/preprogrammed manner. Likewise the measurement of salt, energy and other factors listed can be based on preprogrammed measurements in the system or through exact measurements in the starting or the end materials under processing. Such measurements of the results of the chilling can be fed back to the control of the system to intensify and increase/decrease salt, energy, frequency of the discharge and degree of ice in the wet snow produced.

In one aspect of the invention, the wet snow produced is applied and used to cover pieces of fresh foodstuffs, such as of fish or chicken in a process chain or on a conveyor belt such that the amount of the wet snow applied and the time of contact with the pieces can be controlled. Furthermore in such a process chain or on a conveyor belt the temperature of the pieces can be monitored such as to control the temperature and contact-time of the wet snow in order to obtain the desired cooling of the pieces in the process. To ensure that the correct amount of wet snow is used, the quantity, temperature and mixture of the starting liquid is calculated, mixed and then used to make ice-slurry.

In another aspect of the invention, the apparatus is used to deliver or shoot a certain amount of wet snow, with the correct temperature, cooling energy, viscosity, salt content, frequency and amount to chill the foodstuff in the correct, predefined manner and at the correct area on the foodstuff.

In certain embodiments the invention can be incorporated into a food processing chain, such as if attached to a conveyer belt that is moving animal carcasses, such as poultry, after slaughter and feather removal and by controlled delivering of wet snow onto a carcass can be used for rapid cooling and for controlling the temperature of the carcass parts in the process line.

In certain embodiments the invention can be incorporated into a food processing chain, such as if attached to a conveyer belt that is moving parts of meat or fish between processing stations and by controlled delivering of wet snow onto the parts can be used to control the temperature of the food parts in the process line.

In another aspect of the invention, the apparatus is used to separate ice and liquid from an ice-slurry mixture and thereby delivering a clean portion of wet snow on one side and liquid with concentrated solutes in the other side. In this aspect the invention can be used in treating of wastewater, such as animal urine.

The invention also contemplates certain methods for carrying out concentrations of the soluble materials present in the original aqueous feed solution used for making the ice-slurry. In this aspect the invention can be used to increase the concentration of solutes before applying more expensive concentrations methods, such as ultrafiltration, distillation or drying.

In one embodiment, the invention is a method for controlled precooling of foodstuffs before packaging in insulated packaging boxes for transport.

In another aspect the invention can be used to make wet snow for incorporating into transport containers, such as to control the temperature of foodstuffs during storage and transportation.

The invention uses known chemical and physical principles to combine in a new way a set of actions and design of an apparatus that makes the actions possible and therefore useful and commercially viable. The invention is therefore an efficient method and is expected to be useful and consequently to have large potential for industrial application and commercial use. The novel conical design of the filter unit is key to the trouble-free operation of the current invention, and is thus non-obvious and provides a clear inventive step compared to prior art.

Additional features and advantages of the present invention are described in, and will be apparent from, the following Detailed Description of the Invention and the figures.

### BRIEF DESCRIPTION OF THE FIGURES

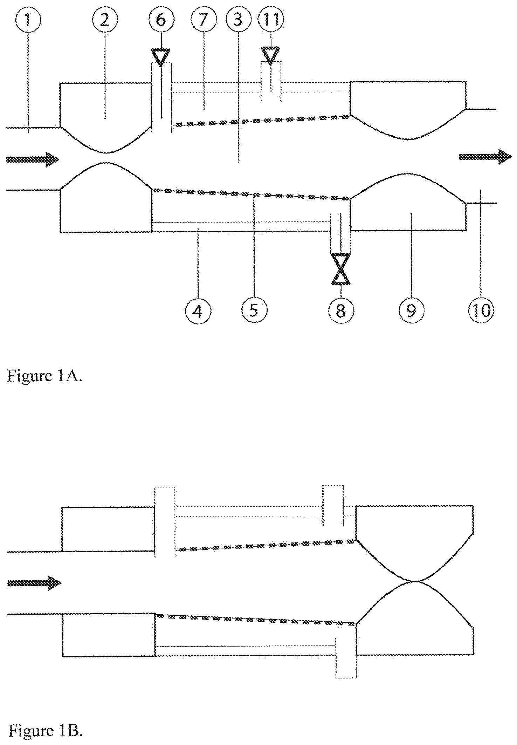

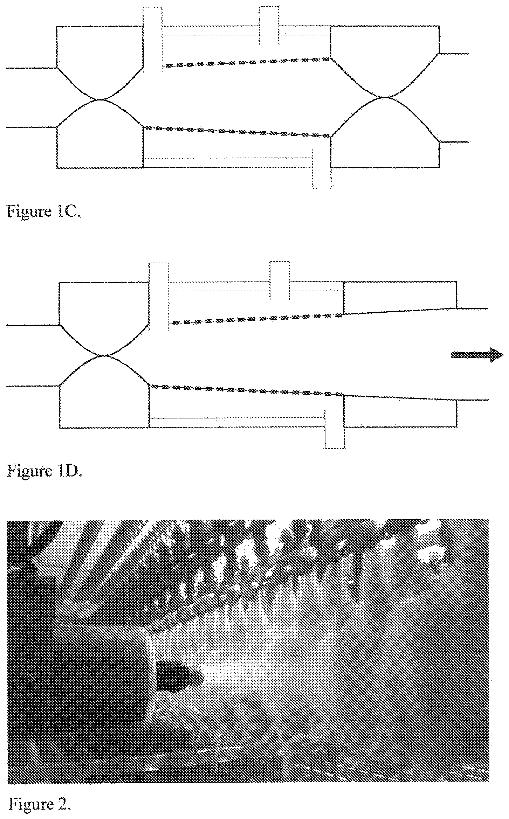

Figure 1A shows a drawing of the apparatus in a transection view with the conical filter unit, closing valves and inlet and outlet pipes for different functions. Figures 1B shows the position when loading the apparatus with ice-slurry, Figure 1C shows the position when both inlet and outlet (discharge) valves are closed and filtering takes place, Figure ID shows the position when discharging (shooting) the wet snow out of the apparatus.
Figure 2 shows a photograph of the apparatus being applied for cooling fresh chicken on a conveyer belt in real-life commercial settings. The figure shows a real-life photograph of using a prototype apparatus of the invention to deliver the wet snow onto the surface of chicken carcass on a conveyer belt. The chicken was treated in a commercial setting after it had been through a feather picking machine at 57°C, from where it goes onto the conveyer belt for removing of internal organs and opening of the neck along with the repeated washing in between. The chicken then enters the cooling room where it is normally cooled by cold air and cold water spraying. It is possible to station the apparatus of the invention at several places during this process. In this example the chickens were treated inside the cooling room on the conveyer belt for the controlled demonstration.

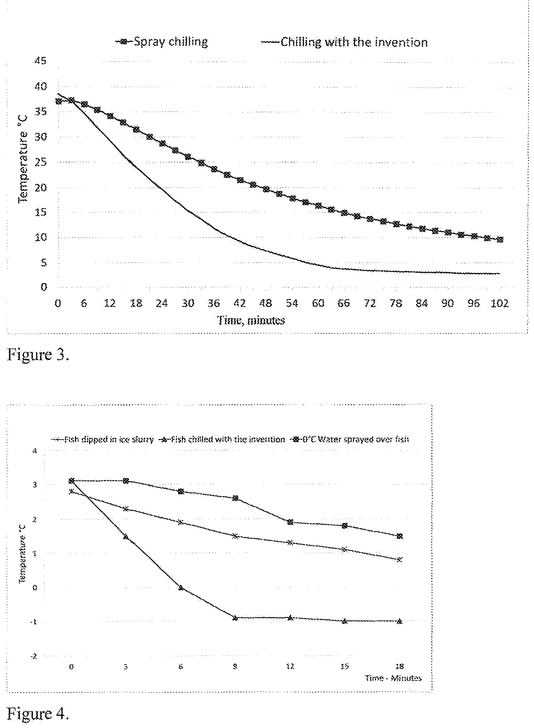

Figure 3 shows the cooling efficiency when wet snow of the invention is used for cooling a whole chicken carcass as shown in Figure 2, compared to conventional cooling by a combined cold blast air and cold water spray. The figure shows a temperature tracing of the internal temperature in the breast of the chickens shown in figure 2 when treated with wet snow of the invention. A similar temperature tracing is shown for a whole chicken carcass when cooled by the traditional method of the commercial settings using cold air blowing and cold water spraying.
Figure 4 shows the cooling efficiency when we snow of the invention is used for cooling a part of a fish as compared to conventional cooling by spraying with cold water or by soaking into a tank with normal ice-slurry.

### DETAILED DESCRIPTION OF THE INVENTION

As described herein, the invention is used to make wet snow by separating ice and liquid from an ice-slurry in an efficient and continuous way and thereby delivering the so produced wet snow for use in rapid chilling of perishable products, such as meat and fish. The invention can also be used for desalination and for concentration of solutes from polluted wastewater such as animal urine. The preferred embodiments of the invention adapted for continuously cooling food products, will now be described in details with reference to the drawings and figures provided.

Unless defined otherwise, all technical terms used herein have the same meaning as commonly understood by one of ordinary skill in the art to which the invention belongs.

### EXAMPLE 1

This example shows drawings of the apparatus of the invention. Figure 1A shows a transection through the prototype version of the invention. The function of the individual parts as numbered in the drawing in Figure 1 are explained according to the following list:
1. Intake tube for pumping of ice-slurry into main chamber of the apparatus.
2. Pinch valve for controlling the intake of ice-slurry into main process chamber
3. Cavity of main process chamber housing the porous conical filter unit #5.
4. External shell wall of the main process chamber.
5. Conical filter unit with apex facing the direction of flow and the conical filter unit gets filled with ice-slurry upon opening of pinch valve #2.
6. Inlet for attaching air-tube for putting air pressure inside the filter unit by opening of air valve.
7. Cavity between the porous filter shell #5 and the and the external shell wall #4
8. Outlet for removing the liquid pressed from the ice-slurry through the filter in the conical filter unit #5 into the cavity #7, using air or solenoid valve for one or two directional flow.
9. Pinch valve for controlling the shooting of wet snow out of the conical filter unit and upon opening for simultaneous air valve to allow air pressure through inlet #6.
10. Outlet opening or tube directing shooting of the wet snow onto target.
11. Inlet for additional operations if needed, such as more suction/vacuum/pressure to further dewatering, or adding water to wash the wet snow or to increase the temperature of the wet snow, or adding brine with higher salt concentration to lower the temperature of the wet snow, or to clean the filter by administering a washing liquid with reverse flow action.

Position 1 shown in Figure 1B is when inlet valve is open for loading the apparatus with ice-slurry.

Position 2 shown in Figure 1C is when both inlet and outlet (discharge) valves are closed and filtering takes place.

Position 3 shown in Figure 1D is when outlet valve is open for discharging (shooting) the wet snow out of the apparatus.

### EXAMPLE 2

This example demonstrates the use of the invention for cooling chicken carcass on a conveyer belt. Figure 2 shows a photograph of a prototype testing of the apparatus in real-life commercial setting. It shows how the wet snow can be delivered to different places and cavities of a chicken carcass where it adheres and then melts slowly and thereby cooling the carcass.

### EXAMPLE 3

This example demonstrates the use of the invention for cooling chicken carcass on a conveyer belt. Figure 3 shows the temperature tracing of a chicken chilled with the invention as viewed in the operation in Figure 2 and how the wet snow can be delivered to different places and cavities of a chicken carcass where it adheres and melts slowly and thereby cooling the carcass. In this example most of the experiments were done by using incoming ice-slurry with about 25% ice and made from a salt solution containing 3.5 to 7% NaCl. Test have also been successfully done with wet snow of about 30% ice to about 85% ice, and also with nearly saturated NaCl solution, with temperatures as low as -20°C. The wet snow as produced by the invention can deliver wet snow over a wide range of ice percent content, or from 30% to at least 90% ice and at temperatures from about 0.5°C to about -15°C.

### EXAMPLE 4

This example demonstrates the use of the invention for cooling a part of a fish with wet snow, after the fish had been cut and was traveling along a conveyor belt in a commercial fish processing factory. Enough wet snow was delivered on top of the fish part to cover about 30-70% of the fish part with about 5 mm layer of ice-slurry of the invention. The ambient temperature in the factory was about 9°C when the experiment was done. At the same time fish parts were also cooled with two types of traditional cooling methods, i.e. spraying with about 5 liters of cold water with 0.2% salt in order to reach 0°C and immersing the fish part into a plastic box with ice-slurry as produced before filtering and as normally used in the factory. The measurements were done using the parts of fresh cod cut from the same section of the cod in all cases and ranging from 270 grams to 310 grams. The temperature was measured in the core muscle of the fish using calibrated thermometers. Figure 4 shows temperature tracings of the internal temperature in the fish parts when comparing the use of wet snow of the invention and two traditional methods.

## Claims

1. A method for manufacturing wet snow, comprising the steps of:
making ice-slurry in an ice-slurry generator and pumping ice-slurry from a supply to a wet snow making system;
operating a wet snow making system, composed of a wet snow making apparatus with at least one conical filter unit (5), having a conically shaped porous filter housing (3) within a wet snow-making chamber (7) of the wet snow making apparatus;
feeding of ice-slurry from the supply through Z at least one inlet (1) into the conical filter unit (5) inside the wet snow-making apparatus;
impacting the ice-slurry by air pressure through at least one inlet (6) and filtering the ice-slurry in the conically shaped filter housing (3) inside the snow-making apparatus;
discharging wet snow with air pressure from at least one outlet (10) of the wet snow-making apparatus.

2. A method as claimed in claim 1, wherein ice-slurry can contain 0.05 to 25% salt such as NaCl, preferably 1 to 15% NaCl, even more preferably 2 to 10% NaCl.

3. A method as claimed in claim 1, wherein wet snow discharged from the wet snow making apparatus and onto a specific target is **characterized in that**:
wet snow can contain 30 to 90% ice, preferably 40 to 80% ice, even more preferably 45 to 75% ice;
wet snow discharged can contain 0.01 to 10% salt, preferably 0.05 to 5% salt, even more preferably 0.1 to 2% salt;
wet snow discharged is at temperature of 0 to -20°C, preferably at temperature of -1 to - 10°C, even more preferably at temperature of -2 to -5°C.

4. A method as claimed in claim 1, wherein the conically shaped filter housing (3) within the wet snow-making chamber (7) of the wet snow making apparatus is in the form of a truncated cone or conical frustum, and shaped as a right circular cone with an apex angle between 140 to 179.9 degrees, preferably between 160 to 179.5 degrees, even more preferably between 170 to 179 degrees.

5. A method as claimed in claim 1, wherein the ice-slurry enters the conical filter housing through a narrow opening or aperture end of the conical filter unit (5) and wet snow is discharged through a wide opening or base end of the conical filter unit (5).

6. A wet snow making apparatus, comprising:
a wet snow making chamber (7) having at least one inlet (1) to receive ice-slurry from a supply and at least one outlet (10) for the discharge of wet snow;
at least one conical filter unit (5), having a conically shaped filter housing (3) within the wet snow-making chamber (7) of the wet snow making apparatus;
where the apex of the conically shaped filter housing (3) is directed against the flow of the ice-slurry;
at least one inlet (6) for pressured air for impacting the ice-slurry and filtering the ice-slurry in the conical filter unit (5) inside the wet snow-making apparatus and converting ice-slurry into wet snow;
at least one outlet (8) for collecting, discharging and transferring of the liquid filtered through conically shaped filter housing, out of the wet snow-making apparatus.

7. An apparatus as claimed in claim 6, wherein the conically shaped filter housing (3) within the wet snow-making chamber (7) of the wet snow making apparatus is in the form of a truncated cone or conical frustum, and shaped as a right circular cone; where the apex angle of the truncated cone is in the range of 140 to 179.9 degrees, more preferably in the range of 160 to 179.5 degrees, most preferably in the range of 170 to 179 degrees.

8. An apparatus according to claim 6, wherein the inside volume of the wet snow making chamber (7) is between 5 to 500 ml and where processing frequency is in a range of 10 to 200 shots of wet snow per minute, even more preferably where the inside volume of the chamber is between 20 to 150 ml and where processing frequency is in a range of 20 to 60 shots of wet snow per minute.

9. A system for producing wet snow, comprising:
ice-slurry from an ice-slurry generator or from a supply of ice-slurry;
a wet snow making apparatus as claimed in claim 6;
an ice-slurry transfer apparatus to transfer ice-slurry to an inlet of the wet snow making apparatus, and a wet snow transfer apparatus powered by pressured air to transfer wet snow that is discharged out of the wet snow making apparatus wherein the opening of inlet for ice-slurry and for discharge of wet snow are controlled by valves, and wherein the wet snow making apparatus is fitted with various controllable valves and monitoring devices and said valves being powered by air pressure and monitoring devices being controlled and run by electronic means such a by a computer.

10. An apparatus according to claim 6, made by and from any number of different materials, such as metals, organic materials or synthetic materials such as steel, rubber or plastics.

11. An apparatus according to claim 6, where different forces can be brought into or applied to different inlets and outlets, such as to bring the ice-slurry into the chamber or to apply pressurized air or vacuum to the wet snow making chamber (7) and the extent and frequency of such applications are controlled by electronic means such a by a computer.

12. A system according to claim 9, wherein the ice-slurry used can be made of a fluid that is aqueous, or substantially aqueous, containing different solutes, such as salts, sugars or alcohols in different concentrations.

13. A system according to claim 9, wherein the ice-slurry used can be made of a fluid that is prepared from polluted water streams, including, but not limited to animal urine, such as pig urine or wastewater from food processing, milk processing, fish processing or various other industries that produce wastewater containing solutes of inorganic or organic nature.

14. A system according to claim 9, wherein the ice-slurry is made from a polluted wastewater to thereby perform a chemical separation action, wherein the resulting wet snow contains lower solute concentration than was in the original polluted wastewater, and drained liquid produced contains higher solute concentration than was in the original polluted wastewater.

## Patentansprüche

1. Verfahren zur Herstellung von Nassschnee, umfassend die Schritte:
Herstellen von Eisbrei in einem Eisbreigenerator und Pumpen von Eisbrei aus einem Vorrat in ein Nassschneeherstellungssystem;
Betreiben eines Nassschneeherstellungssystems, bestehend aus einer Nassschneeherstellungsvorrichtung mit mindestens einer konischen Filtereinheit (5), die ein konisch geformtes poröses Filtergehäuse (3) innerhalb einer Nassschneeherstellungskammer (7) der Nassschneeherstellungsvorrichtung aufweist;
Zuführen von Eisbrei aus dem Vorrat durch mindestens einen Einlass (1) in die konische Filtereinheit (5) innerhalb der Nassschneeherstellungsvorrichtung;
Auftreffenlassen des Eisbreis durch Luftdruck durch mindestens einen Einlass (6) und Filtern des Eisbreis in dem konisch geformten Filtergehäuse (3) innerhalb der Nassschneeherstellungsvorrichtung;
Austragen von Nassschnee mit Luftdruck aus mindestens einem Auslass (10) der Nassschneeherstellungsvorrichtung.

2. Verfahren nach Anspruch 1, wobei Eisbrei 0,05 bis 25 % Salz wie NaCl, bevorzugt 1 bis 15 % NaCl, noch bevorzugter 2 bis 10 % NaCl, enthalten kann.

3. Verfahren nach Anspruch 1, wobei aus der Nassschneeherstellungsvorrichtung und auf ein spezifisches Ziel ausgetragener Nassschnee **dadurch gekennzeichnet ist, dass**:
Nassschnee 30 bis 90 % Eis, bevorzugt 40 bis 80 % Eis, noch bevorzugter 45 bis 75 % Eis, enthalten kann;
ausgetragener Nassschnee 0,01 bis 10 % Salz, bevorzugt 0,05 bis 5 % Salz, noch bevorzugter 0,1 bis 2 % Salz, enthalten kann;
ausgetragener Nassschnee eine Temperatur von 0 bis -20 °C, bevorzugt eine Temperatur von -1 bis -10 °C, noch bevorzugter eine Temperatur von -2 bis -5 °C, aufweist.

4. Verfahren nach Anspruch 1, wobei das konisch geformte Filtergehäuse (3) innerhalb der Nassschneeherstellungskammer (7) der Nassschneeherstellungsvorrichtung in Form eines abgeschnittenen Kegels oder eines Kegelstumpfs vorliegt und als gerader Kreiskegel mit einem Scheitelwinkel zwischen 140 bis 179,9 Grad, bevorzugt zwischen 160 bis 179,5 Grad, noch bevorzugter zwischen 170 bis 179 Grad, geformt ist.

5. Verfahren nach Anspruch 1, wobei der Eisbrei durch ein/e schmale/s Öffnung oder Öffnungsende der konischen Filtereinheit (5) in das konische Filtergehäuse eintritt und Nassschnee durch ein/e weite/s Öffnung oder Basisende der konischen Filtereinheit (5) ausgetragen wird.

6. Nassschneeherstellungsvorrichtung, umfassend:
eine Nassschneeherstellungskammer (7) mit mindestens einem Einlass (1) zum Aufnehmen von Eisbrei aus einem Vorrat und mindestens einem Auslass (10) zum Austragen von Nassschnee;
mindestens eine konische Filtereinheit (5) mit einem konisch geformten Filtergehäuse (3) innerhalb der Nassschneeherstellungskammer (7) der Nassschneeherstellungsvorrichtung;
wobei der Scheitel des konisch geformten Filtergehäuses (3) gegen die Strömung des Eisbreis gerichtet ist;
mindestens einen Einlass (6) für Druckluft zum Auftreffenlassen auf den Eisbrei und Filtern des Eisbreis in der konischen Filtereinheit (5) innerhalb der Nassschneeherstellungsvorrichtung und Umwandeln von Eisbrei in Nassschnee;
mindestens einen Auslass (8) zum Sammeln, Austragen und Übertragen der durch konisch geformtes Filtergehäuse gefilterten Flüssigkeit aus der Nassschneeherstellungsvorrichtung.

7. Vorrichtung nach Anspruch 6, wobei das konisch geformte Filtergehäuse (3) innerhalb der Nassschneeherstellungskammer (7) der Nassschneeherstellungsvorrichtung in Form eines abgeschnittenen Kegels oder Kegelstumpfs vorliegt und als gerader Kreiskegel geformt ist; wobei der Scheitelwinkel des abgeschnittenen Kegels in dem Bereich von 140 bis 179,9 Grad, bevorzugter in dem Bereich von 160 bis 179,5 Grad, am bevorzugtesten in dem Bereich von 170 bis 179 Grad, liegt.

8. Vorrichtung nach Anspruch 6, wobei das Innenvolumen der Nassschneeherstellungskammer (7) zwischen 5 bis 500 ml beträgt und wobei die Verarbeitungsfrequenz in dem Bereich von 10 bis 200 Schuss Nassschnee pro Minute liegt, noch bevorzugter, wobei das Innenvolumen der Kammer zwischen 20 bis 150 ml beträgt und wobei die Verarbeitungsfrequenz in dem Bereich von 20 bis 60 Schuss Nassschnee pro Minute liegt.

9. System zur Herstellung von Nassschnee, umfassend:
Eisbrei aus einem Eisbreigenerator oder aus einem Eisbreivorrat;
eine Nassschneeherstellungsvorrichtung nach Anspruch 6;
eine Eisbrei-Übertragungsvorrichtung zum Übertragen von Eisbrei an einen Einlass der Nassschneeherstellungsvorrichtung, und
eine Nassschnee-Übertragungsvorrichtung, die durch Druckluft angetrieben wird, zum Übertragen von Nassschnee, der aus der Nassschneeherstellungsvorrichtung ausgetragen wird, wobei die Öffnung des Einlasses für Eisbrei und zum Austragen von Nassschnee durch Ventile gesteuert werden, und wobei die Nassschneeherstellungsvorrichtung mit verschiedenen steuerbaren Ventilen und Überwachungsvorrichtungen ausgestattet ist und die Ventile durch Luftdruck angetrieben werden und Überwachungsvorrichtungen durch elektronische Mittel wie solch einen durch einen Computer gesteuert und betrieben werden.

10. Vorrichtung nach Anspruch 6, hergestellt durch und aus einer beliebigen Anzahl von verschiedenen Materialien wie Metallen, organischen Materialien oder synthetischen Materialien wie Stahl, Gummi oder Kunststoffen.

11. Vorrichtung nach Anspruch 6, wobei verschiedene Kräfte in unterschiedliche Einlässe und Auslässe eingebracht oder auf diese angewandt werden können, um z. B. den Eisbrei in die Kammer zu bringen oder um Druckluft oder Vakuum auf die Nassschneeherstellungskammer (7) anzuwenden, und der Umfang und die Häufigkeit solcher Anwendungen durch elektronische Mittel wie solch einen durch einen Computer gesteuert werden.

12. System nach Anspruch 9, wobei der verwendete Eisbrei aus einem Fluid hergestellt werden kann, das wässrig oder im Wesentlichen wässrig ist und verschiedene gelöste Stoffe wie Salze, Zucker oder Alkohole in verschiedenen Konzentrationen enthält.

13. System nach Anspruch 9, wobei der verwendete Eisbrei aus einem Fluid hergestellt werden kann, das aus verschmutzten Wasserströmen hergestellt wird, einschließlich, aber nicht beschränkt auf, Tierurin wie Schweineurin oder Abwasser aus der Lebensmittelverarbeitung, Milchverarbeitung, Fischverarbeitung oder verschiedenen anderen Industrien, die Abwasser erzeugen, das gelöste Stoffe anorganischer oder organischer Art enthält.

14. System nach Anspruch 9, wobei der Eisbrei aus einem verschmutzten Abwasser hergestellt wird, um dadurch eine chemische Trennwirkung durchzuführen, wobei der resultierende Nassschnee eine geringere Konzentration gelöster Stoffe enthält, als in dem ursprünglich verschmutzten Abwasser war, und die erzeugte abgelassene Flüssigkeit eine höhere Konzentration gelöster Stoffe enthält, als in dem ursprünglichen verschmutzten Abwasser war.

## Revendications

1. Procédé permettant la fabrication de neige humide comprenant les étapes de :
production d'un coulis de glace dans un générateur de coulis de glace et le pompage du coulis de glace à partir d'une alimentation vers un système de production de neige humide ;
le fonctionnement d'un système de production de neige humide, composé d'un appareil de production de neige humide avec au moins une unité de filtre conique (5), possédant un boîtier de filtre poreux de forme conique (3) à l'intérieur d'une chambre de production de neige humide (7) de l'appareil de production de neige humide ;
l'alimentation en coulis de glace en provenance de l'approvisionnement par au moins une entrée (1) dans l'unité de filtre conique (5) à l'intérieur de l'appareil de production de neige humide ;
l'impact du coulis de glace par pression d'air à travers au moins une entrée (6) et le filtrage du coulis de glace dans le boîtier de filtre de forme conique (3) à l'intérieur de l'appareil de production de neige humide ;
la décharge de neige humide au moyen d'une pression d'air à partir d'au moins une sortie (10) de l'appareil de production de neige humide.

2. Procédé selon la revendication 1, ledit coulis de glace pouvant contenir de 0,05 à 25 % de sel tel que NaCl, de préférence de 1 à 15 % de NaCl, encore mieux de 2 à 10 % de NaCl.

3. Procédé selon la revendication 1, ladite neige humide déchargée de l'appareil de production de neige humide et sur une cible spécifique étant **caractérisée en ce que** :
la neige humide peut contenir de 30 à 90 % de glace, de préférence de 40 à 80 % de glace, mieux encore de 45 à 75 % de glace ;
la neige humide déchargée peut contenir de 0,01 à 10 % de sel, de préférence de 0,05 à 5 % de sel, mieux encore de 0,1 à 2 % de sel ;
la neige humide déchargée est à une température de 0 à -20°C, de préférence à une température de -1 à -10°C, mieux encore à une température de -2 à -5°C.

4. Procédé selon la revendication 1, ledit boîtier de filtre de forme conique (3) à l'intérieur de la chambre de production de neige humide (7) de l'appareil de production de neige humide se présentant sous la forme d'un cône tronqué ou d'un tronc conique et façonné sous forme de cône circulaire droit avec un angle de sommet compris entre 140 et 179,9 degrés, de préférence entre 160 et 179,5 degrés, mieux encore entre 170 et 179 degrés.

5. Procédé selon la revendication 1, ledit coulis de glace pénétrant dans le boîtier de filtre conique à travers une ouverture étroite ou une extrémité d'orifice de l'unité de filtre conique (5) et ladite neige humide étant déchargée à travers une large ouverture ou extrémité de base de l'unité de filtre conique (5).

6. Appareil de production de neige humide, comprenant :
une chambre de production de neige humide (7) possédant au moins une entrée (1) pour recevoir le coulis de glace en provenance d'un approvisionnement et au moins une sortie (10) destinée à la décharge de la neige humide ;
au moins une unité de filtre conique (5) possédant un boîtier de filtre de forme conique (3) à l'intérieur de la chambre de production de neige humide (7) de l'appareil de production de neige humide ;
où le sommet du boîtier de filtre de forme conique (3) est dirigé contre l'écoulement du coulis de glace ;
au moins une entrée (6) d'air sous pression destiné à impacter le coulis de glace et filtrer le coulis de glace dans l'unité de filtre conique (5) à l'intérieur de l'appareil de production de neige humide et convertir le coulis de glace en neige humide ;
au moins une sortie (8) destinée à collecter, décharger et transférer le liquide filtré à travers un boîtier de filtre de forme conique, hors de l'appareil de production de neige humide.

7. Appareil selon la revendication 6, ledit boîtier de filtre de forme conique (3) à l'intérieur de la chambre de production de neige humide (7) de l'appareil de production de neige humide étant de la forme d'un cône tronqué ou d'un tronc conique, et façonné sous forme de cône circulaire droit ; où l'angle de sommet du cône tronqué est compris dans la plage de 140 à 179,9 degrés, mieux encore dans la plage de 160 à 179,5 degrés, idéalement dans la plage de 170 à 179 degrés.

8. Appareil selon la revendication 6, ledit volume intérieur de la chambre de production de neige humide (7) étant compris entre 5 et 500 ml et où la fréquence de traitement est comprise dans une plage de 10 à 200 éjections de neige humide par minute, mieux encore où le volume intérieur de la chambre est compris entre 20 et 150 ml et où la fréquence de traitement est comprise dans une plage de 20 à 60 éjections de neige humide par minute.

9. Système destiné à la production de neige humide, comprenant :
un coulis de glace provenant d'un générateur de coulis de glace ou d'un approvisionnement en coulis de glace ;
un appareil de production de neige humide selon la revendication 6 ;
un appareil de transfert de coulis de glace pour transférer le coulis de glace vers une entrée de l'appareil de production de neige humide,
et
un appareil de transfert de neige humide alimenté par de l'air sous pression pour transférer la neige humide qui est déchargée hors de l'appareil de production de neige humide, ladite ouverture de l'entrée pour le coulis de glace et celle pour la décharge de neige humide étant commandées par des soupapes, et ledit appareil de production de neige humide étant équipé de diverses soupapes et dispositifs de surveillance pouvant être commandés et lesdites soupapes étant alimentées par la pression d'air et les dispositifs de surveillance étant commandés et actionnés par un moyen électronique tel qu'un ordinateur.

10. Appareil selon la revendication 6, réalisé au moyen et à partir d'un nombre quelconque de matériaux différents, tels que des métaux, des matériaux organiques ou des matériaux synthétiques tels que l'acier, le caoutchouc ou les plastiques.

11. Appareil selon la revendication 6, où différentes forces peuvent être amenées dans, ou appliquées à, différentes entrées et sorties, par exemple pour amener le coulis de glace dans la chambre ou pour appliquer de l'air sous pression ou du vide à la chambre de production de neige humide (7) et l'étendue et la fréquence de ces applications étant commandées par un moyen électronique tel qu'un ordinateur.

12. Système selon la revendication 9, ledit coulis de glace utilisé pouvant être constitué d'un fluide qui est aqueux, ou sensiblement aqueux, contenant différents solutés, tels que des sels, des sucres ou des alcools à différentes concentrations.

13. Système selon la revendication 9, ledit coulis de glace utilisé pouvant être constitué d'un fluide qui est préparé à partir de flux d'eau pollués, y compris, mais sans s'y limiter, de l'urine animale, telle que de l'urine de porc ou des eaux usées provenant de la transformation des aliments, de la transformation du lait, de la transformation du poisson ou diverses autres industries qui produisent des eaux usées contenant des solutés de nature inorganique ou organique.

14. Système selon la revendication 9, ledit coulis de glace étant produit à partir d'eaux usées polluées pour effectuer ainsi une action de séparation chimique, ladite neige humide résultante contenant une concentration de soluté inférieure à celle des eaux usées polluées d'origine, et le liquide drainé produit contenant une concentration de soluté plus élevé que dans les eaux usées polluées d'origine.
